# EUROPEAN PATENT SPECIFICATION

(11) **EP 0 704 146 B1**
(45) Date of publication and mention of the grant of the patent: **31.05.2000**
(21) Application number: 95850167.8
(22) Date of filing: 25.09.1995
(51) Int. Cl.: A01B 23/02

(54) **Device in cultivation implements**
Kultivatorvorrichtung
Dispositif de cultivateur

(30) Priority: 28.09.1994 SE 9403283
(43) Date of publication of application: 03.04.1996
(73) Proprietor: C M WIBERGS FÖRSÄLJNINGS AB, 733 73 Ransta (SE)
(72) Inventor: Hellberg, Bertil, S-733 73 Ransta (SE)
(74) Representative: Karlsson, Leif Karl Gunnar

(56) References cited:
- BE-A- 646 477
- FR-A- 374 100
- FR-A- 511 412
- FR-A- 2 645 395
- US-A- 1 805 481
- US-A- 2 908 340
- US-A- 3 171 500

## Description

### Technical field

The present invention relates to a device in cultivation implements having working means of the kind stated in the preamble of claim 1. Usually, a plurality of such working means are removably attached side by side to the frame of a harrow, cultivator or sowing machine to carry out harrowing, cultivating, and sowing, respectively.

### Prior art

Working means of the above described kind exist in a variety of configurations. Common to most of them is that the point that works the soil is attached to a free end of the tine-shaped working means by at least one fastening means including a bolt and a nut. One reason for this releasable attachment is that, when the point is worn down, it must be possible to replace it by an unused one. Another reason is that the point may be turnable and/or provided with alternative mounting holes so that the point may be moved downwards gradually relative to the tine as the point is worn. It may thus become necessary to detach the fastening means and to reuse it a number of times during the life of a point.

A problem known for a long time is that the nut and/or the bolt has been subject to wear or deformation, so that it has been difficult and sometimes impossible to detach the nut from the bolt. In order to achieve detachment, it has therefore been necessary to destroy the bolt-nut-connection using, for example, a cutting blowpipe, which could cause damage to the tine, too, and which sometimes makes the entire tine unusable.

SE-C 4131 relates to a fastening device for replaceable points of harrow tines. The point is formed as a sheath partly comprising the tine and is removably attached to the same by means of a screw and a nut. During harrowing, the screw and the nut are acted on from below by the ground material, especially if it contains large stones, so that the screw-nut-connection will be deformed or destroyed.

### Summary of the invention

It is an object of the present invention to eliminate, at least partly, the above stated disadvantages and to provide a device in which the fastening means is not subject to wear or deformation, which in turn implies that the point is easily detachable from the working means.

This object is achieved in that the device according to the invention is provided with the features stated in the characterizing portions of the claims.

### Description of the figures

Fig. 1 is a side view of a harrowing tine provided with a device not according to the invention,
Fig. 2 is a view along the line II-II of Fig. 1,
Fig. 3 is a side view of a harrowing tine provided with a device according to the invention,
Fig. 4 is a view along the line IV-IV of Fig. 3,
Fig. 5 is a side view of a harrowing tine provided with a device not according to the invention, and
Fig. 6 is a view along the line VI-VI of Fig. 5.

### Preferred embodiments

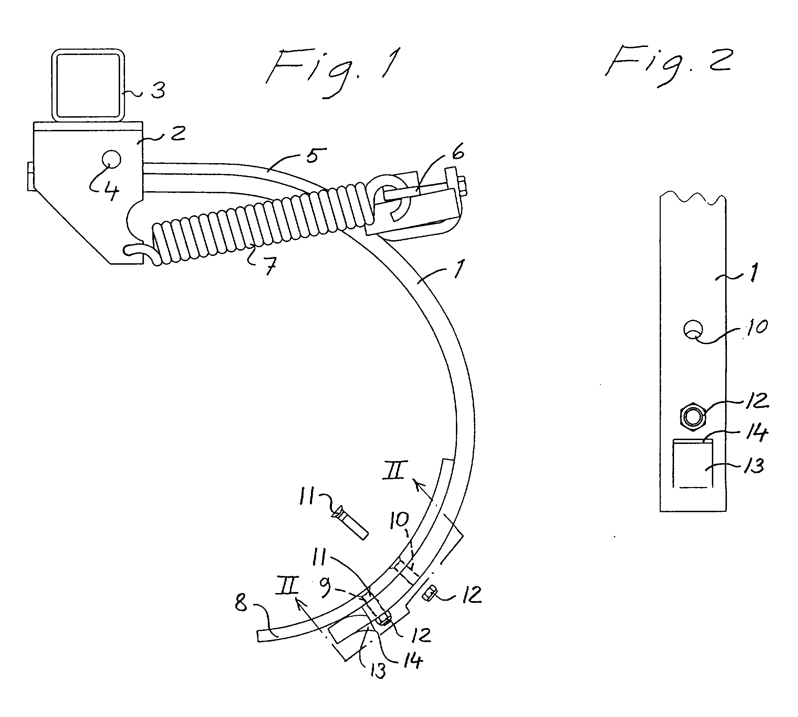

In Fig. 1 there is depicted a C-shaped harrowing tine 1, which is removably attached to a harrowing frame 3 by means of a fastener 2. The tine 1 is swingably attached to the fastener 2 at 4. The tine 1 is provided with a reinforcement 5, whose portion farthest away from the fastener is formed as a spring mounting 6. One or more helical springs 7 are mounted between the fasteners 2 and 6. On swinging of the tine 1 anti-clockwise relative to the fastener 2 and the frame 3, which swinging is caused by resistance during harrowing, the springs 7 provide a gradually increasing resistance.

At the free end of the tine 1 there is provided a cutting edge or point 8 of tempered steel. The point 8 and the tine are provided with through holes 9 and 10. Into said holes, bolts 11 are inserted. Nuts 12 and spacers, if any, are threaded onto the bolts 11 on the side of the tine 1 facing away from the point 8, i.e. against the harrowing direction.

A tongue 13 is partly cut out in the lower part of the tine 1, below the bolts 11 and the nuts 12. After cutting out, the tongue 13 has been folded outwardly (downwardly) from the tine so that its free upper edge 14 is located at a distance from the lower surface of the tine equalling or exceeding the distance of the free ends of the nuts 12 and bolts 11 from said lower surface of the tine.

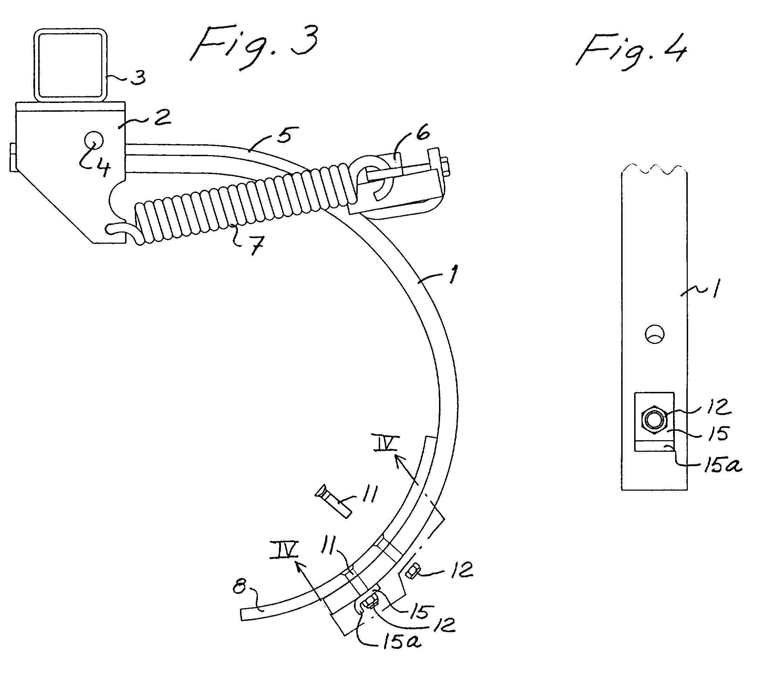

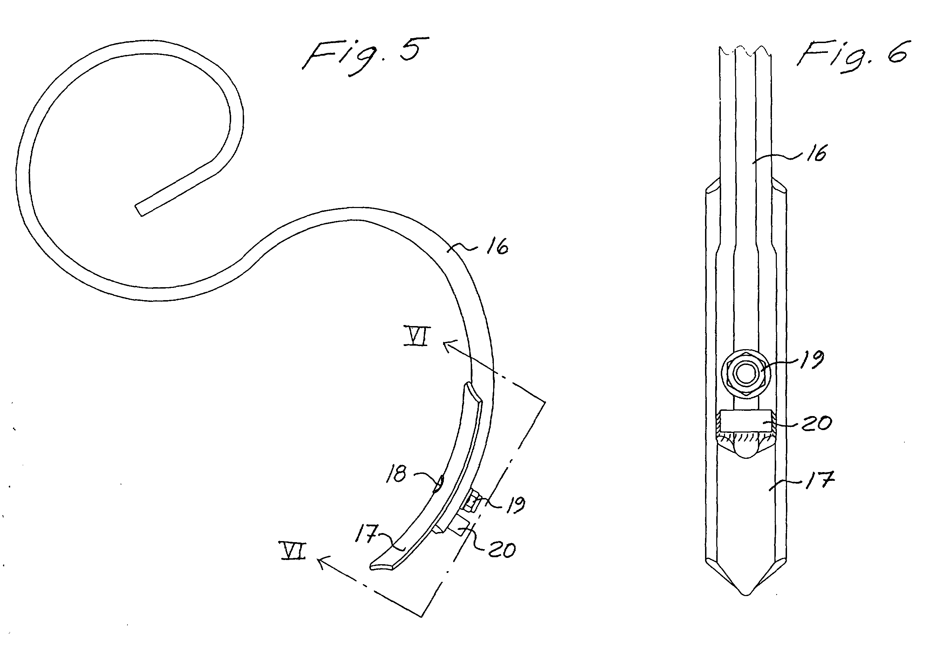

Figs. 3 and 4 show the same details as in Figs. 1 and 2 except that the tongue 13 has been replaced by an L-shaped plate 15 provided with a hole. The plate 15 is attached to the tine 1 in that it has been slipped onto the lower bolt 11 via its hole, whereafter the nut 12 has been threaded onto the latter. The portion 15a of the plate 15, which portion protrudes more or less transversely to the tine 1, is located under the nut 12.

In Figs. 5 and 6 there is shown an S-shaped harrowing tine 16 which is attached to a harrowing frame in a manner not shown. To the lower end of the tine 16 there is attached, by means of a bolt 18 and a nut 19, a point 17 formed as a curved plate in that the bolt has been passed through holes in the tine 16 and in the point 18 from the left in Fig. 5 whereafter spacers, if any, and the nut have been threaded onto the bolt. A hard-wearing body 20 such as of steel has been welded to the tine 16 between its lower end and the nut 19, which body is preferably higher than the nut.

The tongue 14, plate 15 and body 20 all provide protection of the nut 12, 19 and the end of the bolt 11, 18 which may be protruding out of the same. During harrowing, the protective means will therefore first contact the ground and will prevent at least large lumps of ground material, such as stone, from getting into contact with the nut or the bolt.

While only one embodiment of the present invention has been described above and shown in the drawings it will be appreciated that the invention is not limited to said embodiments but only by what is stated in the claims.

## Claims

1. A device in cultivation implements having a plurality of working means formed as tines (1; 16) which are insertable into the ground and each of which includes a point (8; 17) removably attached to the working means by a fastening means (11, 12; 18, 19), said fastening means (11, 12; 18, 19) including a bolt (11; 18) extending through a hole in the working means (1; 16) and a hole in the point (8; 17) and having an end protruding outside a main surface of the working means (1; 16), said end having a nut (12; 19), **characterized** by a protective means (13; 15; 20) attached to the working means which prevents wear of the fastening means (11, 12; 18, 19) when the end of the working means provided with the point is driven through the soil, the protective means (13; 15; 20) being arranged adjacent to said nut (12; 19) and protruding from said main surface and which protective means (13, 15; 20) is attached between the fastening means (11, 12; 18, 19) and the free end of the working means (1; 16) on the side of the working means facing away from the point and in that the protective means consists of a L-shaped plate (15) attached to the working means (1; 16) by means of the fastening means (11, 12; 18, 19).

## Patentansprüche

1. Vorrichtung in Landwirtschafts- bzw. Kultivierungswerkzeugen mit einer Vielzahl von Arbeitsmittel bzw. Werkzeugen in Form von Zinken (1; 16) welche in den Boden einsetzbar sind und von denen jede eine Spitze bzw. ein Ende (8; 17) beinhaltet, welche(s) entfernbar an dem Arbeitsmittel durch ein Befestigungsmittel (11, 12; 18, 19) angebracht ist, wobei das Befestigungsmittel (11, 12; 18; 19) einen Bolzen (11; 18) beinhaltet, welcher sich durch ein Loch in dem Arbeitsmittel (1; 16) und ein Loch in der Spitze (8; 17) erstreckt und ein Ende aufweist, welches aus einer Hauptfläche des Arbeitsmittel (11; 16) hervorsteht, wobei das Ende eine Mutter (12; 19) aufweist, gekennzeichnet durch ein Schutzmittel (13; 15; 20) welches an dem Arbeitsmittel angebracht ist und Verschleiß des Befestigungsmittel (11, 12; 18, 19) verhindert, wenn das Ende des Arbeitsmittels, welches mit der Spitze versehen ist, durch den Boden getrieben wird, wobei das Schutzmittel (13; 15, 20) angrenzend zu der Mutter (12; 19) angeordnet ist und von der Hauptfläche vorsteht und das Schutzmittel (13, 15; 20) zwischen dem Befestigungsmittel (11, 12; 18, 19) und dem freien Ende des Arbeitsmittels (1; 16) an der Seite des Arbeitsmittels, welche von der Spitze wegweist, angebracht ist, und daß das Schutzmittel aus einer L-förmigen Platte 15 besteht, welche an dem Arbeitsmittel (1; 16) durch das Befestigungsmittel (11, 12; 18, 19) angebracht ist.

## Revendications

1. Dispositif d'outils de culture ayant une pluralité de moyens d'exploitation en forme de fourchons (1 ; 16) et qui peuvent être insérés dans le sol, chaque outil comprenant une pointe (8 ; 17) fixée de manière amovible aux moyens d'exploitation par un moyen de fixation (11, 12 ; 18, 19), ledit moyen de fixation (11, 12 ; 18, 19) incluant un boulon (11 ; 18) passant à travers un trou dans les moyens d'exploitation (1 ; 16) et à travers un trou dans la pointe (8 ; 17) et ayant une extrémité faisant saillie à l'extérieur d'une surface principale des moyens d'exploitation (1 ; 16), ladite extrémité ayant un écrou (12 ; 19), caractérisé par des moyens de protection (13 ; 15 ; 20) fixés aux moyens d'exploitation qui empêchent l'usure des moyens de fixation (11, 12 ; 18, 19) lorsque l'extrémité des moyens d'exploitation munie de la pointe est insérée dans le sol, les moyens de protection (13 ; 15 ; 20) étant disposés de façon contiguë audit écrou (12 ; 19) et faisant saillie depuis ladite surface principale et lesquels moyens de protection (13, 15 ; 20) sont fixés entre les moyens de fixation (11, 12 ; 18, 19) et l'extrémité libre des moyens d'exploitation (1 ; 16) sur le côté des moyens d'exploitation opposés à la pointe et en ce que les moyens de protection se composent d'une plaque en forme de L (15) fixée aux moyens d'exploitation (1 ; 16) à l'aide des moyens de fixation (11, 12 ; 18, 9).
